(19) Europäisches Patentamt
European Patent Office
Office européen des brevets

(11) **EP 2 899 785 A1**

(12) **EUROPEAN PATENT APPLICATION**

(43) Date of publication:
**29.07.2015 Bulletin 2015/31**

(21) Application number: **14197142.4**

(22) Date of filing: **10.12.2014**

(51) Int Cl.:
***H01M 4/90*** *(2006.01)*
***H01M 4/92*** *(2006.01)*
***B01J 31/28*** *(2006.01)*
***H01M 8/10*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.01.2014 KR 20140008295**

(71) Applicant: **Samsung SDI Co., Ltd.**
**Yongin-si, Gyeonggi-do (KR)**

(72) Inventors:
- **Kim, Jun-Young**
  **Gyeonggi-do (KR)**
- **Kim, Yeon-Su**
  **Gyeonggi-do (KR)**
- **Lee, Sung-Chul**
  **Gyeonggi-do (KR)**
- **Kim, Tae-Yoon**
  **Gyeonggi-do (KR)**
- **Kim, Hee-Tak**
  **Gyeonggi-do (KR)**

(74) Representative: **Mounteney, Simon James**
**Marks & Clerk LLP**
**90 Long Acre**
**London**
**WC2E 9RA (GB)**

(54) **Electrode catalyst for fuel cell, method of preparing the same, electrode for fuel cell including the electrolyte catalyst, and fuel cell including the electrode**

(57) In an aspect herein is provided an electrode catalyst for a fuel cell including a carbonaceous carrier and a metal catalyst supported in the carbonaceous carrier, wherein an amino $C_6$-$C_{30}$ polycyclic aromatic hydrocarbon compound is non-covalently bonded to the surface of the carbonaceous carrier, an electrode comprising said catalyst and a fuel cell including the electrode catalyst and electrode.

FIG. 1

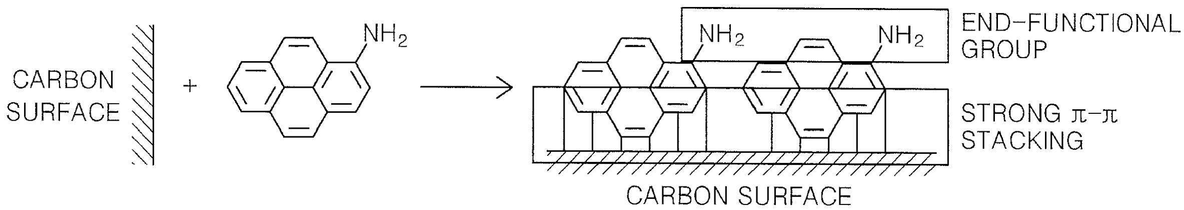


EP 2 899 785 A1

## Description

BACKGROUND

Field

The described technology relates to an electrode catalyst for a fuel cell, a method of manufacturing the electrode catalyst for a fuel cell, an electrode for a fuel cell containing the electrode catalyst and a fuel cell including the electrode catalyst.

Description of the Related Technology

A fuel cell may be categorized as a polymer electrolyte membrane fuel cell (PEMFC), a direct methanol fuel cell (DMFC), a phosphoric acid fuel cell (PAFC), a molten carbonate fuel cell (MCFC), a solid oxide fuel cell (SOFC), and the like.

The PEMFC and the DMFC conventionally include a membrane-electrode assembly (MEA) including an anode, a cathode, and a polymer electrolyte membrane disposed between the anode and the cathode. The anode of the fuel cell includes a catalyst layer for oxidizing a fuel and the cathode includes a catalyst layer for reducing an oxidizing agent.

However, the electrochemical surface area (ECSA) of a metal catalyst may be reduced due to corrosion and agglomeration of carbonaceous carriers that occur during the operation of a fuel cell. Due to this corrosion and agglomeration the use of an electrode catalyst that includes a metal catalyst may reduce the activity and the durability of the electrode catalyst. Thus, improvements are needed.

SUMMARY

In some embodiments disclosed herein, there is provided an amino electrode catalyst for a fuel cell including a carbonaceous carrier and a metal catalyst supported in the carbonaceous carrier, wherein the carbonaceous carrier is non-covalently bonded to a $C_6$-$C_{30}$ polycyclic aromatic hydrocarbon compound having an amino group at an end thereof, on the surface of the carbonaceous carrier.

In some embodiments there is provided an electrode for a fuel cell including the electrode catalyst.

In some embodiments there is provided a fuel cell including a cathode, an anode that is disposed opposite to the cathode, and an electrolyte membrane disposed between the cathode and the anode, wherein at least one of the cathode and the anode includes the electrode catalyst.

Use of the electrode catalyst for a fuel cell according to embodiments herein results in a fuel cell having improved durability and activity.

At least some of the above and other features of the invention are set out in the claims.

BRIEF DESCRIPTION OF THE DRAWINGS

FIG. 1 illustrates an interaction between a carbonaceous carrier and a polyaromatic compound having an amino group at an end thereof, wherein the compound is non-covalently bonded to a surface of the carbonaceous carrier in an electrode catalyst according to a present embodiment;

FIG. 2 is an exploded perspective view showing an embodiment of a fuel cell;

FIG. 3 is a schematic view of a cross-section of a membrane electrode assembly (MEA) in a fuel cell;

FIG. 4 is an image of high-resolution transmission electron microscopy (HRTEM) analysis of the electrode catalyst manufactured according to Example 1;

FIG. 5 is an image of selected area electron diffraction (SAED) analysis of the electrode catalyst manufactured according to Example 1;

FIG. 6 is a chart showing the particle diameter distribution of the electrode catalyst manufactured according to Example 1. The particle diameter was measured using transmission electron microscopy (TEM) and the particle diameter distribution can be calculated, for example, by taking the mean diameter and standard deviations from 300 catalyst particles;

FIG. 7 shows results of x-ray diffraction (XRD) analysis of the carbonaceous carrier and the electrode catalyst of Example 1 and the carbonaceous carrier and the electrode catalyst Comparative Example 1;

FIG. 8 shows results of x-ray diffraction (XRD) analysis of the carbonaceous carrier and the electrode catalyst Example 1;

FIG. 9 shows a Raman spectrum of the carbonaceous carrier used during the manufacturing of the electrode catalyst of Example 1; and

FIG. 10 shows the extent of reduction of an electrochemical surface area (ECSA) of the electrode catalyst in the negative electrode according to Example 1 and Comparative Examples 1 and 2.

DETAILED DESCRIPTION OF CERTAIN INVENTIVE EMBODIMENTS

Hereinafter, an electrode catalyst for a fuel cell according to an embodiment, an electrode for a fuel cell including the electrode catalyst, a method of manufacturing the electrode, and a fuel cell including the electrode containing the electrode catalyst will be described in detail.

The electrode catalyst for a fuel cell includes a carbonaceous carrier and a metal catalyst loaded on the carbonaceous carrier, further wherein the carbonaceous carrier is non-covalently bonded to a $C_6$-$C_{30}$ polycyclic aromatic hydrocarbon compound having an amino group at an end thereof, on the surface of the carbonaceous carrier. In other embodiments of the invention, the polycyclic aromatic hydrocarbon compound may be a $C_8$-$C_{30}$, $C_8$-$C_{28}$, $C_{10}$-$C_{28}$, $C_{10}$-$C_{26}$, $C_{10}$-$C_{24}$, or $C_{10}$-$C_{22}$ (*e.g.* $C_{10}$-$C_{14}$, $C_{14}$-$C_{18}$, or $C_{18}$-$C_{22}$ such as $C_{10}$, $C_{14}$, $C_{18}$ or $C_{22}$) polycyclic aromatic hydrocarbon compound.

As used herein, a non-covalent bond refers to a $\pi$-$\pi$ interaction between one or more phenyl rings of the $C_6$-$C_{30}$ polycyclic aromatic hydrocarbon compound having an amino group at an end thereof and carbon of the carbonaceous carrier. Due to the non-covalent bond, the amino group of the $C_6$-$C_{30}$ polycyclic aromatic hydrocarbon compound having an amino group at an end thereof is located far away from the carbonaceous carrier.

The amino group may be of the formula -L-N($R_1$)($R_2$), wherein $R_1$ and $R_2$ may be each independently a hydrogen, a $C_1$-$C_{10}$ alkyl group or a $C_6$-$C_{10}$ aryl group, and L may simply represent a chemical bond or a $C_1$-$C_{10}$ alkylene group (such as a $C_2$-$C_{10}$ alkylene group, a $C_2$-$C_9$ alkylene group, a $C_2$-$C_8$ alkylene group, a $C_2$-$C_7$ alkylene group, a $C_2$-$C_6$ alkylene group, a $C_2$-$C_5$ alkylene group, or a $C_2$-$C_4$ alkylene group) or a $C_6$-$C_{10}$ arylene group. For example, the amino group may be $-NH_2$, $-NH(CH_3)$, or $-(CH_2)_n-NH_2$ (wherein n is an integer from 1 to 10, *e.g.* from 2 to 10, from 2 to 9, from 2 to 8, from 2 to 7, from 2 to 6, from 2 to 5 or from 2 to 4).

The $C_6$-$C_{30}$ polycyclic aromatic hydrocarbon compound having an amino group at an end thereof is at least one selected from a naphthalene compound having an amino group at an end thereof, a phenanthrene compound having an amino group at an end thereof, a pyrene compound having an amino group at an end thereof, an anthracene compound having an amino group at an end thereof, a tetracene compound having an amino group at an end thereof, a pentacene compound having an amino group at an end thereof and a triphenylene compound having an amino group at an end thereof

The $C_6$-$C_{30}$ polycyclic aromatic hydrocarbon compound having an amino group at an end thereof may be, in greater detail, a compound represented by Formula 1 below; a compound represented by Formula 2 below; an anthracene compound including at least one amino group selected from $-NH_2$ and $-(CH_2)_nNH_2$ (wherein n is an integer from 1 to 10 *e.g.* from 2 to 10, from 2 to 9, from 2 to 8, from 2 to 7, from 2 to 6, from 2 to 5 or from 2 to 4); a phenanthrene compound including at least one amino group selected from $-NH_2$ and-$(CH_2)_nNH_2$ (wherein n is an integer from 1 to 10 *e.g.* from 2 to 10, from 2 to 9, from 2 to 8, from 2 to 7, from 2 to 6, from 2 to 5 or from 2 to 4) group; a tetracene compound including at least one amino group selected from $-NH_2$ and $-(CH_2)_nNH_2$ (wherein n is an integer from 1 to 10 *e.g.* from 2 to 10, from 2 to 9, from 2 to 8, from 2 to 7, from 2 to 6, from 2 to 5 or from 2 to 4); a pentacene compound including at least one selected from

$-NH_2$ and $-(CH_2)_nNH_2$ (wherein n is an integer from 1 to 10 *e.g.* from 2 to 10, from 2 to 9, from 2 to 8, from 2 to 7, from 2 to 6, from 2 to 5 or from 2 to 4); or a triphenylene compound including at least one amino group selected from $-NH_2$ and $-(CH_2)_nNH_2$ (wherein n is an integer from 1 to 10 *e.g.* from 2 to 10, from 2 to 9, from 2 to 8, from 2 to 7, from 2 to 6, from 2 to 5 or from 2 to 4).

Formula 1

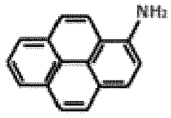

Formula 2

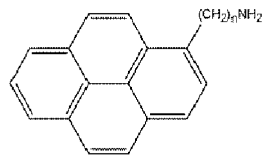

In Formula 2, n is an integer from 1 to 10 *e.g.* from 2 to 10, from 2 to 9, from 2 to 8, from 2 to 7, from 2 to 6, from 2 to 5 or from 2 to 4.

In one embodiment, the amount of the $C_6$-$C_{30}$ polycyclic aromatic hydrocarbon compound having an amino group at an end thereof used in the electrode catalyst is about 0.1 parts by weight to about 50 parts by weight, based on 100 parts by weight of the carbonaceous carrier. In other embodiments, the amount of the $C_6$-$C_{30}$ polycyclic aromatic hydrocarbon compound having an amino group at an end thereof used in the electrode catalyst may be about 1 part by weight to about 50 parts by weight, 5 parts by weight to about 50 parts by weight, or about 10 parts by weight to about 50 parts by weight based on 100 parts by weight of the carbonaceous carrier.

In one embodiment, the amount of the carbonaceous carrier that is non-covalently bonded to the $C_6$-$C_{30}$ polycyclic aromatic hydrocarbon compound having an amino group at an end thereof on the surface of the carbonaceous carrier may be about 20 parts by weight to about 80 parts by weight based on 100 parts by weight of the electrode catalyst (weight of the metal catalyst + weight of the carbonaceous carrier + weight of the $C_6$-$C_{30}$ polycyclic aromatic hydrocarbon compound having an amino group at an end thereof). In other embodiments, the amount of the carbonaceous carrier that is non-covalently bonded to the $C_6$-$C_{30}$ polycyclic aromatic hydrocarbon compound having an amino group at an end thereof on the surface of the carbonaceous carrier may be about 30 parts by weight to about 80 parts by weight, 40 parts by weight to about 80 parts by weight, 50 parts by weight to about 80 parts by weight based on 100 parts by weight of the electrode catalyst

When the amount of the $C_6$-$C_{30}$ polycyclic aromatic hydrocarbon compound having an amino group at an end thereof and the amount of the carbonaceous carrier are in the ranges described above, the durability and activity of the electrode catalyst containing them are excellent.

FIG. 1 illustrates an interaction between a carbonaceous carrier and a $C_6$-$C_{30}$ polycyclic aromatic compound having an amino group at an end thereof, wherein the compound is non-covalently bonded to a surface of the carbonaceous carrier in an electrode catalyst according to an embodiment.

Carbon atoms of the carbonaceous carrier undergo a $\pi$-$\pi$ stacking interaction with one or more aromatic carbon rings of a $C_6$-$C_{30}$ polycyclic aromatic hydrocarbon compound having an amino group at an end thereof. The nitrogen of the amino group in the $C_6$-$C_{30}$ polycyclic aromatic hydrocarbon compound having an amino group at an end thereof, has an unshared electron pair which provides a site for binding to a metal catalyst such as platinum.

As described above, the $C_6$-$C_{30}$ polycyclic aromatic hydrocarbon compounds having an amino group at an end thereof are non-covalently bonded to the carbonaceous carrier and thus, do not alter or deteriorate the structure and properties of the carbonaceous carrier. Accordingly, the metal catalyst may be uniformly dispersed on the carbonaceous carrier without agglomeration of the metal catalyst thus maintaining the stability of the electrode catalyst. As such, problems caused by the deterioration of the catalyst due to the agglomeration of the metal catalyst and electrochemical carbon corrosion, which occur during the operation of the fuel cell, may be prevented. Accordingly, the electrode catalyst may be non-covalently functionalized without the deterioration of the properties of the carbonaceous carrier and thus control the surface properties of the electrode catalyst; improving durability and electrochemical activities of the electrode catalyst. The fact that the properties of the carbonaceous carrier do not change after the amino polycyclic aromatic hydrocarbon compounds non-covalently bind to the carbonaceous carrier may be observed through Raman and x-ray diffraction (XRD) analyses.

The carbonaceous carrier is a material formed of highly crystalline carbon such as carbon black (*e.g.* Ketjen black), heat-treated carbon black, heat-treated acetylene black, activated carbon, graphite, highly pure graphite, carbon nanofibers, carbon fibers, carbon nanotubes, carbon nanowires, carbon nanocages, carbon nanohorns, carbon aerogel, carbon nanorings, mesoporous carbon, ordered mesoporous carbon, graphene, or a combination thereof, but the carbonaceous carrier is not limited thereto and the carbonaceous carrier may be used alone or as a mixture of two or more thereof.

The carbonaceous carrier may include ordered mesoporous carbon having mesopores. An average diameter of mesopores in such material may be about 6 nm to about 10 nm. The ordered mesoporous carbon may be prepared by using a mesoporous silica template (for example, MSU-H or the like). The ordered mesoporous carbon has a wide specific surface area and thus, when the ordered mesoporous carbon is used as the carbonaceous carrier, the weight of the metal supported catalyst may be greater than the weight of the carbonaceous carrier.

In the electrode catalyst, an average particle diameter of the metal catalyst may be about 1 nm to about 20

nm, for example, about 1 nm to about 15 nm, about 2 nm to about 12 nm, or about 3 nm to about 10 nm. When the average particle diameter of the metal catalyst is within the range described above, excellent oxygen reduction activity and electrochemical specific surface area may be maintained.

In this regard, when the average diameter of the metal catalyst of the electrode catalyst is within the range above, the activity of the catalyst including the metal catalyst is excellent.

The amount of the metal catalyst may be about 20 parts by weight to about 80 parts by weight, for example, about 30 parts by weight to about 60 parts by weight, about 30 parts by weight to about 50 parts by weight or about 40 parts by weight to about 50 parts by weight (*e.g.* about 45 parts by weight), based on 100 parts by weight of the total weight of the electrode catalyst (weight of the metal catalyst + weight of the carbonaceous carrier). In the electrode catalyst, when the amount of the metal catalyst is in the range described above, the catalyst may have excellent specific surface area and a large amount of metal supported therein and thus, the activity of the catalyst is excellent.

The metal catalyst may be at least one selected from the group consisting of platinum (Pt), iron (Fe), cobalt (Co), nickel (Ni), ruthenium (Ru), rhodium (Rh), palladium (Pd), osmium (Os), iridium (Ir), copper (Cu), silver (Ag), gold (Au), strontium (Sn), titanium

(Ti), chromium (Cr), and a combination thereof. For example, the metal catalyst may be Pt or a Pt-Co alloy.

The electrode catalyst according to an embodiment of the present disclosure may include Pt and a carbonaceous carrier including a crystalline carbon. The electrode catalyst may be useful for manufacturing an electrode for a fuel cell of a vehicle.

The electrode catalyst has a very large specific surface area, on which various gases and/or liquids, which are subject to electrochemical reactions, may contact. The electrochemical specific surface area of the electrode catalyst may be 70 $m^2/g$ or greater, for example, in a range of about 70 $m^2/g$ to about 100 $m^2/g$, but the electrochemical specific surface area is not limited thereto.

In the carbonaceous carrier, the ratio of the maximum peak intensity of a D band ($I_D$) at about 1340$cm^{-1}$ to about 1360$cm^{-1}$ to a maximum peak intensity of a G band ($I_G$) at about 1575 $cm^{-1}$ to about 1600 $cm^{-1}$ in spectra obtained by Raman spectrometry using a laser having a wavelength of about 514.5 nm, may be about 0.1 to about 1.5, for example, about 0.3 to about 1.0, about 0.4 to about 1.0, about 0.5 to about 1.0, about 0.6 to about 1.0, about 0.7 to about 1.0, or about 0.7 to about 0.9.

In the XRD spectrum of the carbonaceous carrier, a peak with respect to a (002) surface is observed at a Bragg $2\theta$ angle of 26.4 $\pm$ 0.1°, and a half-width of the peak with respect to the (002) surface may be about 0.2° to about 0.7°.

When the carbonaceous carrier has $I_D/I_G$ or the half-width of the peak with respect to the (002) surface in the ranges described above, the surface structure and electrochemical properties of the carbon do not change.

Hereinafter, a method of manufacturing an electrode catalyst for a fuel cell according to an embodiment of the present invention will be described in greater detail.

A $C_6$-$C_{30}$ aromatic hydrocarbon compound having an amino group at an end thereof *(e.g.* a $C_6$-$C_{30}$ aromatic hydrocarbon compound substituted with an amino group or an amino $C_6$-$C_{30}$ polycyclic aromatic hydrocarbon compound) is mixed with a solvent and then a carbonaceous carrier is added thereto to obtain a carbonaceous carrier mixture.

As the solvent, at least one selected from the group consisting of methanol, ethanol, water, N,N-dimethyl sulfoxide, and N,N-dimethyl formamide may be used. In certain embodiments, as the solvent, a mixture of water and ethanol is used. Preferably the ratio of the volume of water to the volume of ethanol is about 95:5.

The crystallinity of carbon of the carbonaceous carrier may be increased to form a stable graphite layer through a heat treatment process. In this regard, the heat treatment process may be performed at a temperature of about 1500°C to about 3000°C (such as about 1500°C to about 2500°C, about 1500°C to about 2500°C or about 2000°C to about 3000°C) in an inert gas atmosphere.

The heat treatment process may be performed according to different heat treatment temperatures, for example, in multiple stages. When the heat treatment process is performed in multiple stages, a carbon having high crystallinity may be obtained.

When the heat treatment is performed at a temperature of 1500°C or greater, but less than 2000°C, the heat treatment of the carbonaceous carrier may be performed according to four stages as described below:

Stage 1: adjust temperature to about 900°C to about 1100°C *(e.g.* about 1000°C) at a heating rate of about 3°C/min to about 7°C/min (*e.g.* about 5°C/min to about 6°C/min);
Stage 2: maintain at a temperature of about 900°C to about 1100°C *(e.g.* about 1000°C) for 5 minutes to about 30 minutes *(e.g.* 5 minutes to about 20 minutes such as about 10 minutes);
Stage 3: adjust temperature from about 900°C to about 1100°C to about 1400°C to about 2000°C *(e.g.* about 1600°C to about 2000°C such as about 1900°C) at a heating rate of about 2°C/min to about 5°C/min (*e.g.* about 3°C/min); and
Stage 4: maintain at a temperature of about 1400°C to about 2000°C *(e.g.* about 1600°C to about 2000°C such as about 1900°C) for 10 minutes to about 60 minutes.

When the heat treatment is performed at a temperature of about 2000°C to about 3000°C, the heat treatment of the carbonaceous carrier may be performed according to six stages as described below:

Stage 1: adjust temperature to about 900°C to about 1100°C *(e.g.* about 1000 °C) at a heating rate of about 3°C/min to about 7°C/min (*e.g*. about 5°C/min to about 6°C/min);
Stage 2: maintain at a temperature of about 900°C to about 1100°C *(e.g.* about 1000°C) for 5 minutes to about 30 minutes *(e.g.* 5 minutes to about 20 minutes such as about 10 minutes);
Stage 3: adjust temperature from about 900°C to about 1100°C *(e.g.* about 1000 °C) to about 1800°C to about 2000°C *(e.g.* about 1900 °C) at a heating rate of about 2°C/min to about 5°C/min (*e.g*. about 3°C/min);
Stage 4: maintain at a temperature of about 1800°C to about 2000°C *(e.g.* about 1900 °C) for about 5 minutes to about 30 minutes (about 10 minutes to about 30 minutes);
Stage 5: adjust temperature to about 2000°C to about 3000°C *(e.g.* about 2100°C to about 2500°C such as about 2250°C) at a heating rate of about 1°C/min to about 3°C/min (*e.g*. about 1°C/min to 2°C/min such as about 1.7°C/min); and
Stage 6: maintain at a temperature of about 2000°C to about 3000°C *(e.g.* about 2100°C to about 2500°C such as about 2250°C) for 10 minutes to about 60 minutes (*e.g*. about 60 minutes).

As described above, the carbonaceous carrier may be thermally treated at different stages and passed through a stabilization-carbonization-graphitization-high crystallization process to obtain a carbonaceous carrier having a stable and highly crystalline structure.
When a carbonaceous carrier including the highly crystalline carbon obtained through the heat treatment process is used, a $\pi$-$\pi$ interaction between one or more phenyl rings of a $C_6$-$C_{30}$ polycyclic aromatic hydrocarbon compound having an amino group at an end thereof and carbon of a water repellent carbonaceous carrier increases the hydrophilicity of the carbonaceous carrier, and the non-shared electron pair of the nitrogen of the amino group of the $C_6$-$C_{30}$ polycyclic aromatic hydrocarbon compound having an amino group at an end thereof also increases the hydrophilicity of the carbonaceous carrier, such that loading the electrode catalyst with a metal catalyst (such as platinum) may be improved.
The carbonaceous carrier has a ratio of the maximum peak intensity of a D band at about 1340cm$^{-1}$ to about 1360cm$^{-1}$ to a maximum peak intensity of a G band at about 1575cm$^{-1}$ to about 1600 cm$^{-1}$ ($I_D/I_G$), in the spectra obtained by Raman spectrometry using a laser having a wavelength of about 514.5 nm, of the carbonaceous carrier may be about 0.1 to about 1.5, for example, about 0.3 to about 1.0 about 0.4 to about 1.0, about 0.5 to about 1.0, about 0.6 to about 1.0, about 0.7 to about 1.0, or about 0.7 to about 0.9. Depending on the heat treatment process, a carbonaceous carrier having a specific surface area of about 50 $m^2/g$ to about 800 $m^2/g$, and an electrode catalyst having improved durability may be manufactured by preventing carbon corrosion.
For the process of manufacturing an electrode catalyst by loading a metal catalyst in the carbonaceous carrier, any method that is generally used in the art may be used.
The electrode catalyst may be applied to a fuel cell for a mobile and a family use, such as a fuel cell used for notebook computers, portable devices, vehicles, and buses.
For example, when an electrode catalyst layer is formed by using the electrode catalyst, a polymer electrolyte membrane fuel cell (PEMFC), a phosphoric acid fuel cell (PAFC), or a direct methanol fuel cell (DMFC) may be manufactured utilizing the electrode catalyst layer.
According to another embodiment of the present invention, there is provided an electrode for a fuel cell including the electrode catalyst.
Hereinafter, a fuel cell including the electrode catalyst will be described in greater detail.
A fuel cell includes a cathode, an anode, and an electrolyte membrane disposed between the cathode and the anode, wherein at least one of the cathode and the anode includes the electrode catalyst.
For example, according to an embodiment of the present invention, the cathode includes the electrode catalyst. In another embodiment of the present invention, the anode includes the electrode catalyst.
The activity of the electrode catalyst is maintained in the fuel cell while using the fuel cell even during long periods of driving or when driving under high temperature conditions, by using the catalyst carrier *(i.e.* carbonaceous carrier is non-covalently bonded to a $C_6$-$C_{30}$ polycyclic aromatic hydrocarbon compound having an amino group at an end thereof) or the electrode catalyst.
The fuel cell may, for example, be a PEMFC or a DMFC cell.
FIG. 2 is an exploded perspective view showing an embodiment of a fuel cell and FIG. 3 is a schematic view of a cross-section of a membrane electrode assembly (MEA) in a fuel cell of FIG. 2.
A fuel cell 1 shown in FIG. 2 schematically includes two unit cells 11 and 11' disposed between a pair of holders 12 and 12'. The unit cells 11 and 11' include a membrane-electrode assembly (MEA) 10 and bipolar plates 20 and 20', each of which is disposed on each side of the MEA 10 in a width direction. The bipolar plates 20 and 20' are formed of a metal having conductivity, carbon, or the like, and each of the bipolar plates 20 and 20' binds to the MEA 10 to function

as a current collector while supplying oxygen and fuel to a catalyst layer of the MEA 10.

The fuel cell 1 shown in FIG. 2 has two unit cells 11 and 11'; however, the number of the unit cells is not limited to two and may be increased to dozens or a few hundred depending on the properties required by the fuel cell.

The MEA 10, as shown in FIG. 3, may include an electrolyte membrane 100 and catalyst layers 110 and 110' may be disposed on each side of the electrolyte membrane 100 in a width direction, and the MEA 10 may include, the catalyst layers 110 and 110' including an electrode catalyst according to an embodiment of the present invention, first gas diffusion layers 121 and 121', which are respectively disposed on the catalyst layers 110 and 110', and second gas diffusion layers 120 and 120', which are respectively disposed on the first gas diffusion layers 121 and 121'.

The catalyst layers 110 and 110' function as a fuel electrode and an oxygen electrode, and each of the catalyst layers 110 and 110' include an electrode catalyst and a binder and may further include a material that may increase the electrochemical surface area of the electrode catalyst. The catalyst layer includes an electrode catalyst according to an embodiment of the present invention.

The first gas diffusion layers 121 and 121' and the second gas diffusion layers 120 and 120' may each be formed of a carbon sheet, a carbon paper, or the like, and diffuse oxygen and fuel supplied through the bipolar plates 20 and 20' to the entire surface of the catalyst layers 110 and 110'.

The fuel cell 1 including the MEA 10 operates at a temperature of about 100°C to about 300°C. Fuel such as hydrogen is supplied to one of two catalyst layers through a bipolar plate 20, 20', and an oxidizing agent such as oxygen is supplied to the other catalyst layer through another bipolar plate 20, 20'. Also, with regard to one catalyst layer, hydrogen ions ($H^+$) are generated due to the oxidation of hydrogen, and the hydrogen ions ($H^+$) are conducted through the electrolyte membrane to reach the other catalyst layer. With regard to the other catalyst layer, the hydrogen ions ($H^+$) and oxygen electrochemically react together to generate water ($H_2O$) as well as electrical energy. Also, hydrogen supplied as a fuel may be hydrogen generated through reformation of hydrocarbon or alcohol, and oxygen supplied as the oxidizing agent may be supplied as included in the air atmosphere.

Hereinafter, embodiments of the present disclosure will be described in detail, but the embodiments are not limited thereto.

<u>Example 1: Manufacturing an electrode catalyst and an electrode</u>

Ketjen black (product name: ECP 300J, manufactured by: Mitsubishi Chemical, Tokyo, Japan) was heat treated in an inert gas atmosphere according to the stages described below.

Stage 1: adjust temperature to 1000°C at a heating rate of 5.4°C/min;
Stage 2: maintain at a temperature of 1000°C for 10 minutes;
Stage 3: adjust temperature to 1900°C at a heating rate of 3°C/min;
Stage 4: maintain at a temperature of 1900°C for 5 minutes;
Stage 5: adjust temperature to 2250°C at a heating rate of 1.7°C/min; and
Stage 6: maintain at a temperature of 2250°C for 60 minutes.

2.0 g of heat-treated Ketjen black according to the stages described above was dispersed in 250 ml of deionized water/ethanol (95/5, v/v) to prepare a dispersion. 0.2 g of a compound represented by Formula 1 that was added to the dispersion and mixture was then stirred for 6 hours. This procedure yielded an amount of the compound represented by Formula 1 was about 10 parts by weight based on 100 parts by weight of Ketjen black.

Formula 1

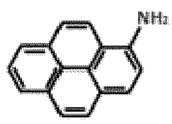

Thereafter, the resulting product was vacuum filtered, washed sequentially with distilled water, methanol, and acetone, and then vacuum dried for 24 hours to prepare a carbonaceous carrier.

25 ml of chloroplatinic acid hexahydrate ($H_2PtCl_6 \cdot 6H_2O$) and 2.5 g of the carbonaceous carrier were added to a mixed solvent of ethylene glycol (580 ml) and deionized water (750 ml). The resultant mixture was then stirred to prepare a dispersion. The pH of the dispersion was adjusted to about 11 using sodium hydroxide solution. The resultant mixture was heat treated to a temperature of 60 °C over 30 minutes, then heat treated to a temperature of 140 °C over

30 minutes, and maintained at a temperature of 140 °C for 4 hours. The reaction mixture was then filtered, washed with ultrapure water, and dried in a vacuum at a temperature of 120 °C to furnish the Pt-loaded catalyst (amount of Pt: 44.8 wt%).

0.03 g of Pt-loaded catalyst (amount of Pt: 44.8 wt%), 500 ml of Nafion (DuPont, Wilmington, Delaware) solution (a solution prepared by diluting a mixture solution of 5 wt% of Nafion, 45 wt% of 1-propanol, and 50 wt% of 3-propanol by 10 times with distilled water) at a concentration of 0.5 wt%, and 4500 ml of isopropyl alcohol were mixed to prepare an electrode catalyst composition. The mixture was sonicated for 20 minutes and then subjected to a conventional stirring process for 1 minute.

6 μl of the electrode catalyst composition was spread on a glassy carbon electrode support having a diameter of 0.5 cm and then dried at room temperature for 5 minutes to prepare a dried product. Thereafter, 7 μl of Nafion solution (solvent: isopropyl alcohol) at 0.05 wt% was added in a drop-wise fashion onto the dried product and then dried for 10 minutes at room temperature to prepare an electrode. As a result, an amount of the loaded catalyst was present in 85 $\mu g/cm^2$.

Example 2: Preparing an electrode catalyst and an electrode

An electrode catalyst and an electrode were prepared in the same manner as in Example 1, except that the amount of the compound represented by Formula 1 was changed to 0.4 g. This procedure yielded an amount of the compound represented by Formula 1 was about 20 parts by weight based on 100 parts by weight of Ketjen black.

Example 3: Preparing an electrode catalyst and an electrode

An electrode catalyst and an electrode were prepared in the same manner as in Example 1, except that the amount of the compound represented by Formula 1 was changed to 1.0 g. In this regard, the amount of the compound represented by Formula 1 was about 50 parts by weight based on 100 parts by weight of Ketjen black.

Comparative Example 1: Preparing an electrode catalyst and an electrode

The same processes as in Example 1 were performed, except that a product obtained from heat-treating Ketjen black (ECP 300J, manufactured by: Mitsubishi Chemical) at a temperature of 2250°C for 1 hour was used as a carbonaceous carrier.

Comparative Example 2: Preparing an electrode catalyst

The same processes as in Example 1 were performed, except that a compound represented by Formula 3 was used instead of the compound represented by Formula 1.

Formula 3

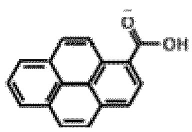

Evaluation Example 1: Transmission electron microscope (TEM) analysis

The electrode catalyst *(i.e.* the Pt-loaded catalyst) prepared according to Example 1 was analyzed through high-resolution transmission electron microscopy (HRTEM)/selected area electron diffraction (SAED) and the results obtained therefrom are shown in FIGS. 4 to 6.

FIGS. 4 to 6 show the electrode catalyst prepared in Example 1 has Pt thoroughly dispersed on a carbon carrier. Also, a series of concentric rings corresponding to a C(002) surface of crystalline carbon and Pt(111), Pt(200), Pt(220), and Pt(311) surfaces of an fcc crystal lattice of Pt were observed through SAED.

Evaluation Example 2: X-ray diffraction (XRD) analysis

X-ray diffraction (XRD) analysis (MP-XRD, Xpert PRO, Philips / Power 3Kw) was performed with respect to the electrode catalysts manufactured in Example 1 and Comparative Example 1 and the results obtained therefrom are shown in FIGS. 7 and 8, and Table 1.

In Table 1 below, $L_C$ represents a crystalline domain size and $d_{(002)}$ represents interplanar spacing.

Table 1

| | $L_C$(Å) | $d_{(002)}$(Å) |
|---|---|---|
| Comparative Example 1 | 34.1 | 3.449 |
| Example 1 | 33.9 | 3.451 |

It may be concluded from Table 1 and FIGS. 7 and 8 that the carbonaceous electrode catalyst prepared in Example 1 has Pt particles having a face-centered cubic lattice (fcc) thoroughly dispersed on a high crystalline carbon carrier.

Evaluation Example 3: Raman spectrum analysis

With respect to the carbonaceous carrier used for manufacturing the electrode catalysts prepared in Examples 1 and 2 and Comparative Example 1, a maximum peak intensity of a G band at about 1575cm$^{-1}$ to about 1600cm$^{-1}$ and a maximum peak intensity of a D band at about 1340cm$^{-1}$ to about 1360cm$^{-1}$ were measured by Raman spectrometer (a product of JASCO Inc., Oklahoma City, Oklahoma) using a laser having a wavelength of 514.5 nm. The results obtained therefrom are shown in FIG. 9. It should be noted that the Raman spectrum analysis was performed on the carbonaceous carrier (*i.e.* Ketjen black) after heat treatment + the amino $C_6$-$C_{30}$ polycyclic aromatic hydrocarbon *(i.e.* compound represented by Formula 1) + the metal catalyst (*i.e.* Pt).

Also, a ratio of the maximum peak intensity of a D band at about 1340cm$^{-1}$ to about 1360cm$^{-1}$ to the maximum peak intensity of a G band at about 1575cm$^{-1}$ to about 1600cm$^{-1}$ was calculated. The results obtained therefrom are shown in Table 2.

In Table 2 below, $I_G$ represents the maximum peak intensity of a G band at about 1575 cm$^{-1}$ to about 1600 cm$^{-1}$ and $I_D$ represents the maximum peak intensity of a D band at about 1340 cm$^{-1}$ to about 1360 cm$^{-1}$.

FWHM represents a half-width of a G band peak.

Table 2

| | FWHM(°) | $I_D/I_G$ | $I_D/I_{(D+G)}$ |
|---|---|---|---|
| Example 1 | 56.6 | 0.83 | 0.49 |
| Example 2 | 56.4 | 0.84 | 0.48 |
| Comparative Example 1 | 55.4 | 0.81 | 0.48 |

Referring to Table 2 and FIG. 9, the carbonaceous carrier and the electrode catalyst prepared in Examples 1 and 2 have similar crystallinity to the carbonaceous carrier and the electrode catalyst prepared in Comparative Example 1, and the carbonaceous carrier and the electrode catalyst prepared in Examples 1 and 2 maintain a reformed state without deterioration of the properties of the highly crystalline carbonaceous carrier.

Evaluation Example 4: Measuring electrochemically active surface area (ECSA) of an electrode

0.03 g of the catalyst prepared according to Example 1 and Comparative Examples 1 and 2 (*i.e.* the carbonaceous carrier after heat treatment + the amino $C_6$-$C_{30}$ polycyclic aromatic hydrocarbon + the metal catalyst), 500 ml of a Nafion solution (a solution prepared by diluting a mixture solution of 5 wt% of Nafion, 45 wt% of 1-propanol, and 50 wt% of 3-propanol by 10 times with distilled water) at a concentration of 0.5 wt%, and 4500 ml of isopropyl alcohol were mixed to prepare a catalyst composition. The mixture was sonicated for 20 minutes and a conventional stirring process for 1 minute.

6 μl of the catalyst composition was spread on a glassy carbon electrode support having a diameter of 0.5 cm and then dried at room temperature for 5 minutes to prepare a dried product. Thereafter, 7 μl of Nafion solution (solvent: isopropyl alcohol) at 0.05 wt% was added to the dried product and then dried for 10 minutes at room temperature to prepare an electrode. In this regard, an amount of the loaded catalyst was about 85 μg/cm$^2$.

The electrode catalyst prepared according to the processes described above was subjected to an accelerated life testing. The accelerated life testing was performed by repeating 1000 cycles of cyclic voltammetry (CV) using the electrode prepared above, Ag/AgCl as a standard electrode, at a temperature of 25°C, in 0.1M $HClO_4$ aqueous solution, and a voltage between about 0.6 V to about 1.4 V based on a standard hydrogen potential.

As described above, the accelerated life testing was performed for every 100 cycles at a scan rate of 20 mV/sec.

Equation 1 below was used to calculate a ratio of reduction of an electrochemical surface area and then normalized. The results obtained therefrom are shown in FIG. 10.

Equation 1

Ratio of reduction of an electrochemical surface area = calculated surface area/initial surface area

Referring to FIG. 10, it may be concluded that the electrode catalyst for a fuel cell prepared in Example 1 showed a smaller loss of ECSA than the electrode catalysts for a fuel cell prepared in Comparative Examples 1 and 2. Thus, it may be concluded that the extent of deterioration of the electrode catalyst for a fuel cell prepared in Example 1 is smaller than the extent of deterioration of the electrode catalysts for a fuel cell prepared in Comparative Examples 1 and 2.

It should be understood that the embodiments described therein should be considered in a descriptive sense only and not for purposes of limitation. Descriptions of features or aspects within each embodiment should typically be considered as available for other similar features or aspects in other embodiments.

## Claims

**1.** An electrode catalyst for a fuel cell comprising:

a carbonaceous carrier and a catalyst metal supported in the carbonaceous carrier,
wherein the carbonaceous carrier is non-covalently bonded to a $C_6$-$C_{30}$ polycyclic aromatic hydrocarbon compound having an amino group at an end thereof, on the surface of the carbonaceous carrier.

**2.** An electrode catalyst for a fuel cell according to claim 1, wherein the amino group is -L-N($R_1$)($R_2$), and $R_1$ and $R_2$ are each independently a hydrogen, a $C_1$-$C_{10}$ alkyl group or a $C_6$-$C_{10}$ aryl group, and L simply represents a chemical bond, or a $C_1$-$C_{10}$ alkylene group or a $C_6$-$C_{10}$ arylene group.

**3.** An electrode catalyst for a fuel cell according to claim 1 or claim 2, wherein the $C_6$-$C_{30}$ polycyclic aromatic hydrocarbon compound having an amino group at an end thereof, is at least one selected from an naphthalene compound having an amino group at an end thereof, phenanthrene compound having an amino group at an end thereof, an pyrene compound having an amino group at an end thereof, an anthracene compound having an amino group at an end thereof, a tetracene compound having an amino group at an end thereof, a pentacene compound having an amino group at an end thereof and a triphenylene compound having an amino group at an end thereof.

**4.** An electrode catalyst for a fuel cell according to any preceding claim, wherein the $C_6$-$C_{30}$ polycyclic aromatic hydrocarbon compound having an amino group at an end thereof, is a compound represented by Formula 1 below; a compound represented by Formula 2 below; an anthracene compound comprising at least one amino group selected from the group consisting of $-NH_2$, and $-(CH_2)_nNH_2$, wherein n is an integer from 1 to 10; a phenanthrene compound comprising at least one amino group selected from the group consisting of $-NH_2$ and $-(CH_2)_nNH_2$ (wherein n is an integer from 1 to 10); a tetracene compound comprising at least one amino group selected from the group consisting of $-NH_2$ and $-(CH_2)_nNH_2$ wherein n is an integer from 1 to 10; a pentacene compound comprising at least one amino group selected from the group consisting of $-NH_2$ and $-(CH_2)_nNH_2$ (wherein n is an integer from 1 to 10); or a triphenylene compound comprising at least one amino group selected from the group consisting of-$NH_2$ and $-(CH_2)_nNH_2$ wherein n is an integer from 1 to 10:

Formula 1

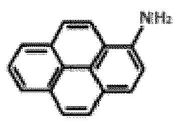

Formula 2

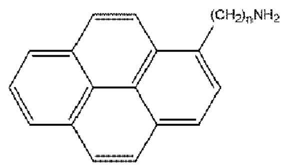

in Formula 2, n is an integer from 1 to 10.

**5.** An electrode catalyst for a fuel cell according to any preceding claim, wherein an amount of the $C_6$-$C_{30}$ polycyclic aromatic hydrocarbon compound having an amino group at an end thereof, is about 0.1 parts by weight to about 50 parts by weight based on 100 parts by weight of the carbonaceous carrier.

**6.** An electrode catalyst for a fuel cell according to any preceding claim, wherein the carbonaceous carrier is carbon black, heat-treated carbon black, heat-treated acetylene black, activated carbon, graphite, highly pure graphite, carbon nanofibers, carbon fibers, carbon nanotubes, carbon nanowires, carbon nanocages, carbon nanohorns, carbon aerogel, carbon nanorings, mesoporous carbon, ordered mesoporous carbon, graphene, or a combination thereof.

**7.** An electrode catalyst for a fuel cell according to claim, wherein an amount of the carbonaceous carrier that is non-covalently bonded to the $C_6$-$C_{30}$ polycyclic aromatic hydrocarbon compound having an amino group at an end thereof on the surface of the carbonaceous carrier is about 20 parts by weight to about 80 parts by weight based on 100 parts by weight of the total weight of the electrode catalyst.

**8.** An electrode catalyst for a fuel cell according to any preceding claim, wherein a ratio of the maximum peak intensity of a D band at about 1340$cm^{-1}$ to about 1360$cm^{-1}$ to a maximum peak intensity of a G band at about 1575 $cm^{-1}$ to about 1600 $cm^{-1}$, which is obtained by Raman spectrometry using a laser having a wavelength of 514.5 nm, is about 0.1 to about 1.5.

**9.** An electrode catalyst for a fuel cell according to any preceding claim, wherein in the XRD spectrum of the carbonaceous carrier, a peak with respect to a (002) surface is observed at a Bragg 2$\theta$ angle of 26.4 $\pm$ 0.1°, and a half-width of the peak with respect to the (002) surface is about 0.2° to about 0.7°.

**10.** An electrode catalyst for a fuel cell according to any preceding claim, wherein the metal catalyst is at least one selected from the group consisting of platinum (Pt), iron (Fe), cobalt (Co), nickel (Ni), ruthenium (Ru), rhodium (Rh), palladium (Pd), osmium (Os), iridium (Ir), copper (Cu), silver (Ag), gold (Au), strontium (Sn), titanium (Ti), chromium (Cr), and a combination thereof.

**11.** An electrode for a fuel cell comprising the electrode catalyst according to any preceding claim.

**12.** An electrode for a fuel cell according to claim 11, wherein the electrode is a cathode.

**13.** A fuel cell comprising:

a cathode,
an anode that is disposed opposite to the cathode, and
an electrolyte membrane disposed between the cathode and the anode, wherein at least one of the cathode and the anode comprises the electrode catalyst according to any one of claims 1 to 10.

FIG. 1

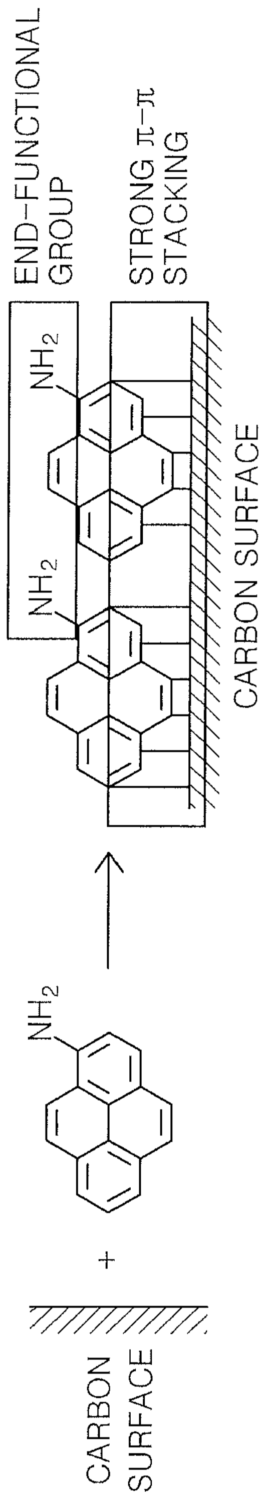
CARBON SURFACE
END-FUNCTIONAL GROUP
STRONG π-π STACKING
CARBON SURFACE

FIG. 2

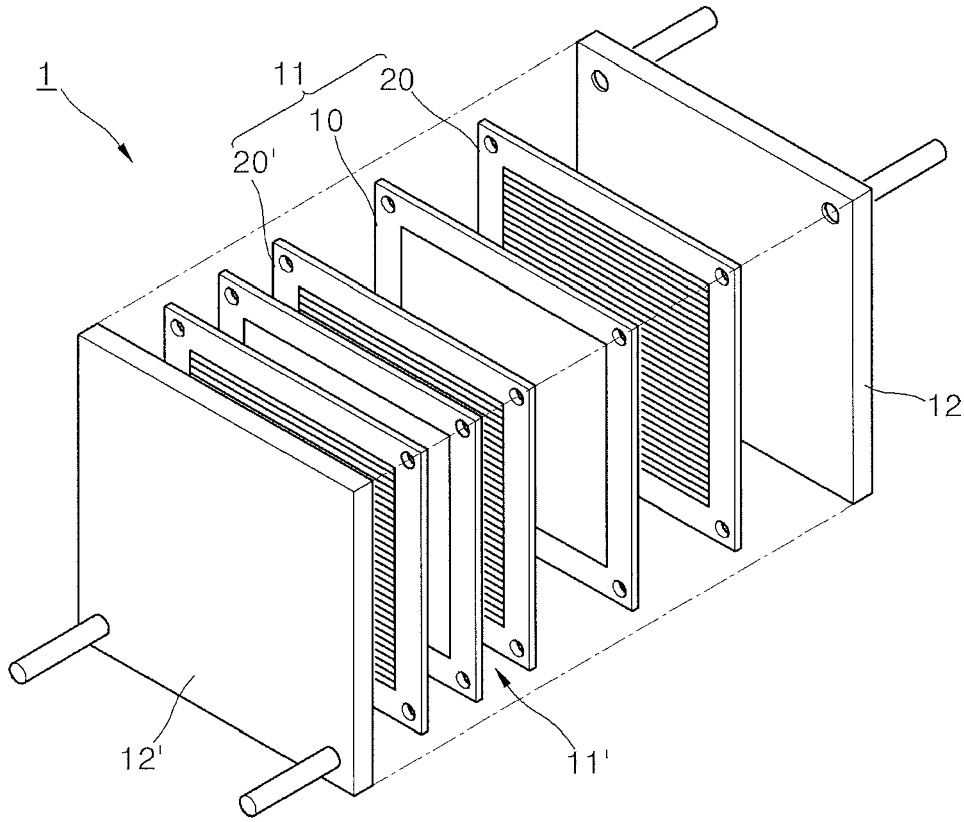

FIG. 3

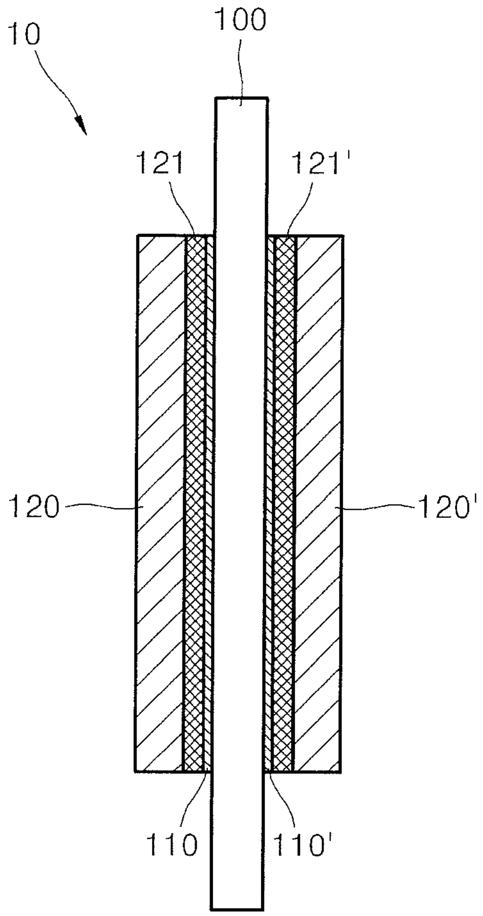

FIG. 4

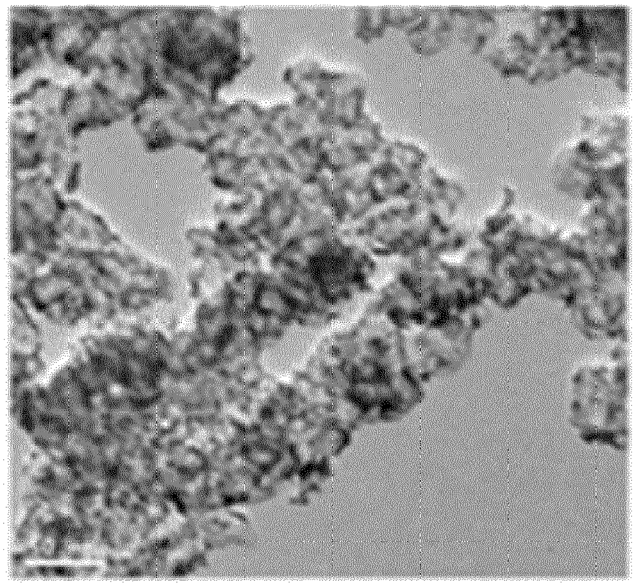

FIG. 5

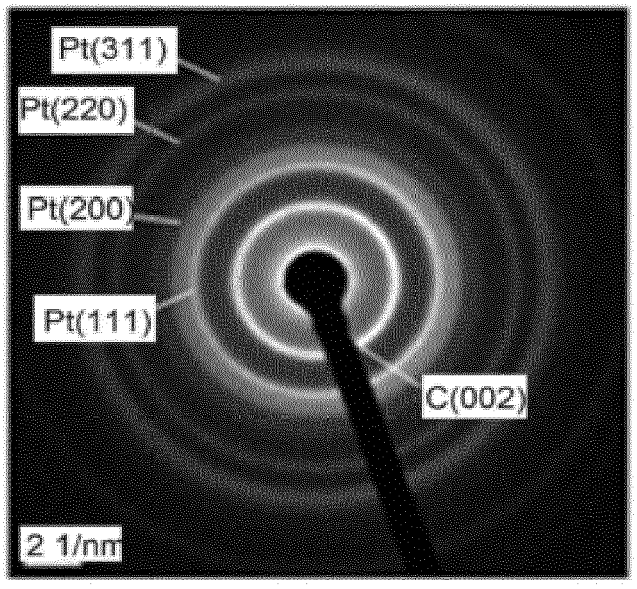

FIG. 6

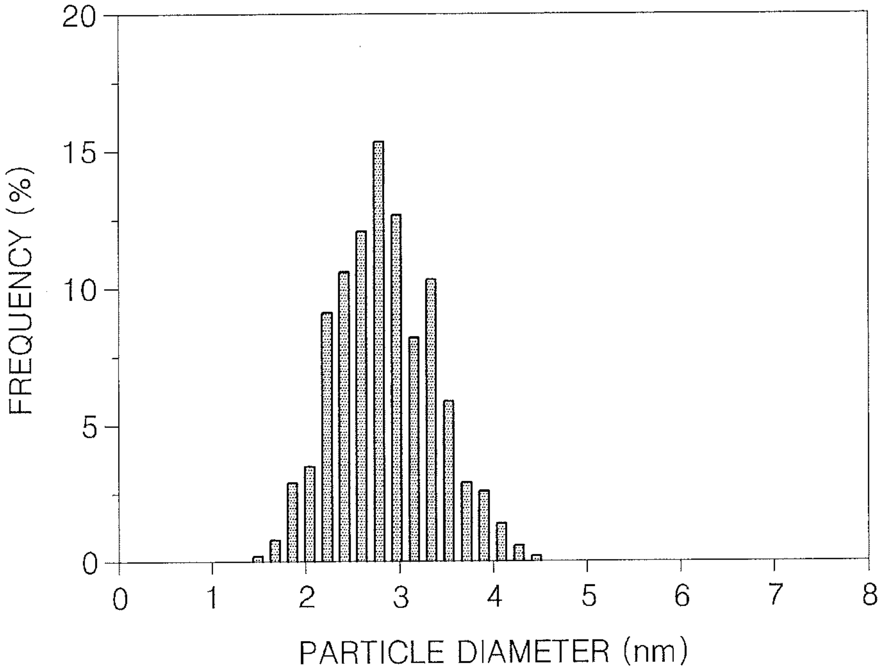

FIG. 7

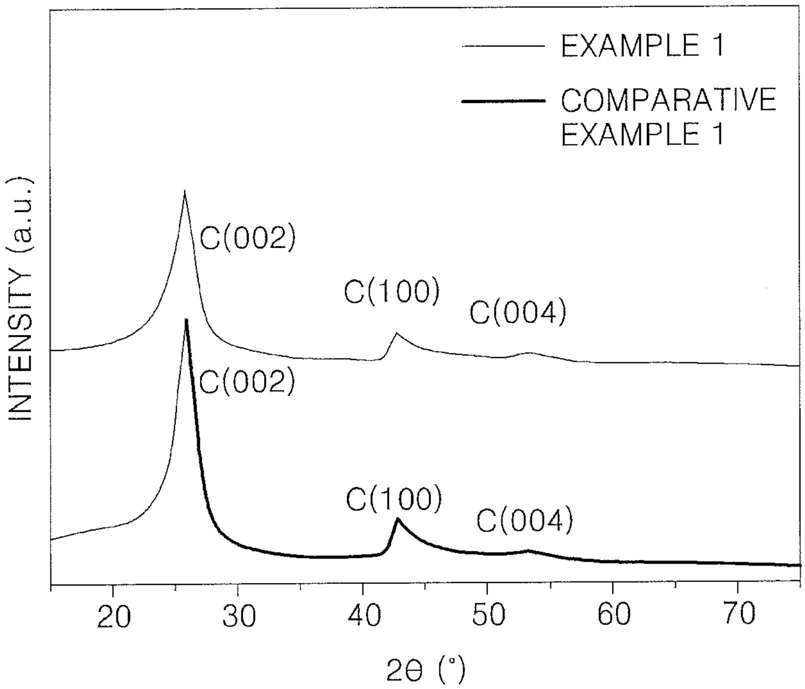
EXAMPLE 1
COMPARATIVE EXAMPLE 1
INTENSITY (a.u.)
C(002)
C(100)
C(004)
C(002)
C(100)
C(004)
20
30
40
50
60
70
2θ (°)

FIG. 8

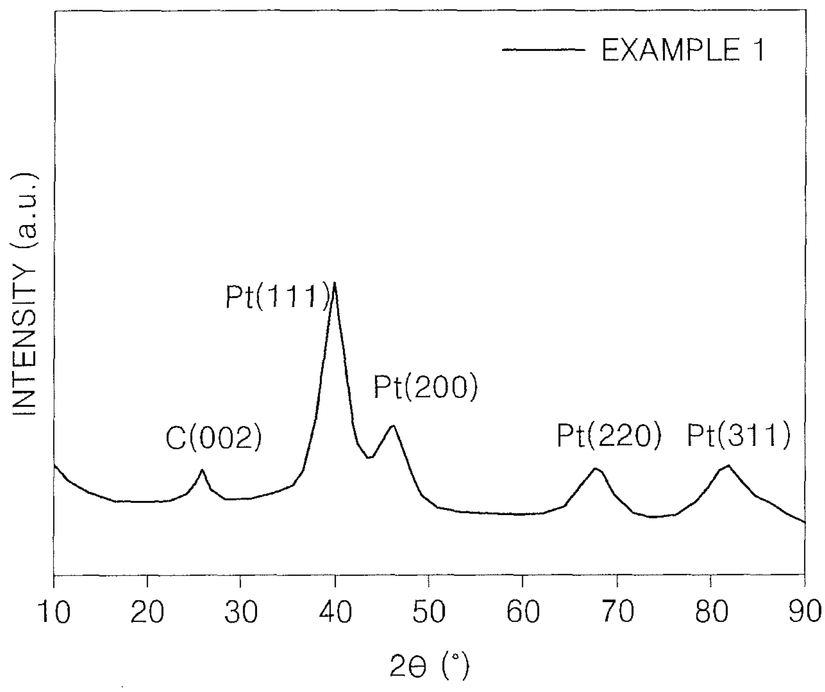
EXAMPLE 1
INTENSITY (a.u.)
Pt(111)
Pt(200)
C(002)
Pt(220)
Pt(311)
10
20
30
40
50
60
70
80
90
2θ (°)

FIG. 9

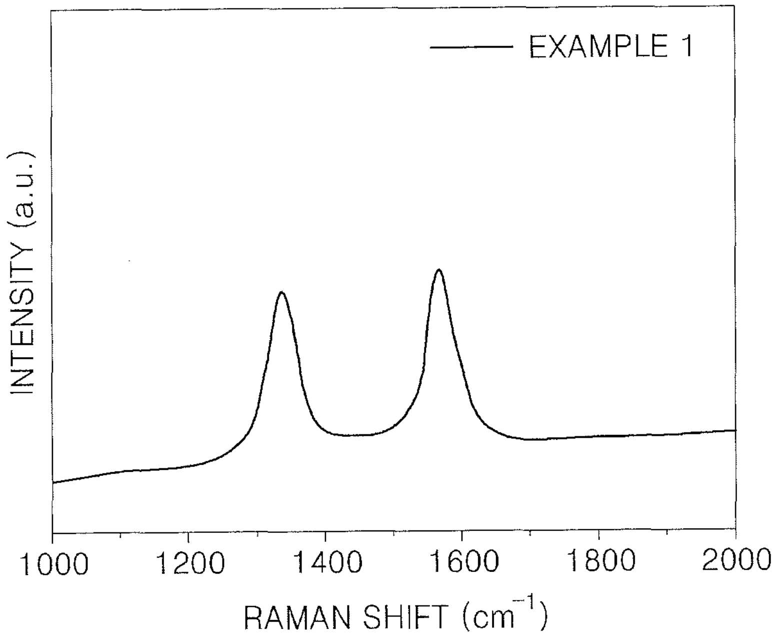
EXAMPLE 1
INTENSITY (a.u.)
1000
1200
1400
1600
1800
2000
RAMAN SHIFT (cm-1)

FIG. 10

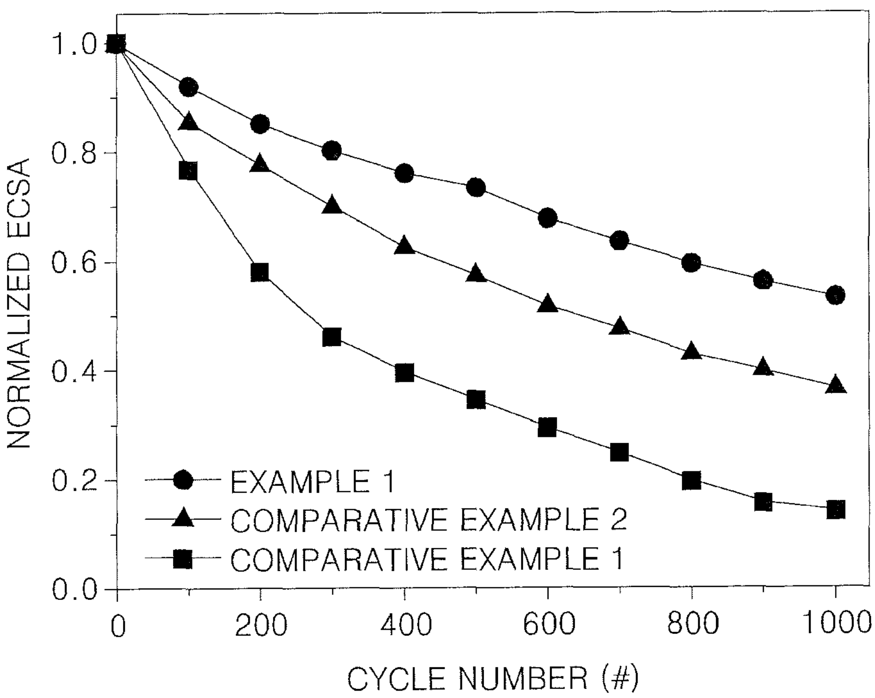
NORMALIZED ECSA
1.0
0.8
0.6
0.4
0.2
0.0
0
200
400
600
800
1000
CYCLE NUMBER (#)
EXAMPLE 1
COMPARATIVE EXAMPLE 2
COMPARATIVE EXAMPLE 1

Europäisches Patentamt
European Patent Office
Office européen des brevets

# EUROPEAN SEARCH REPORT

Application Number
EP 14 19 7142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 041 857 A (UNIV TIANJIN) 17 April 2013 (2013-04-17) * paragraphs [0005] - [0018], [0043] - [0047]; claims 1-5 * ----- | 1-13 | INV. H01M4/90 B01J31/28 H01M4/92 H01M8/10 |
| X | CN 102 120 186 A (UNIV NANJING) 13 July 2011 (2011-07-13) * paragraphs [0010] - [0019], [0023] - [0028] * ----- | 1-13 | |
| X | US 2011/129762 A1 (LEE KI SUB [KR] ET AL) 2 June 2011 (2011-06-02) * paragraphs [0010] - [0017], [0032] - [0041], [0055] * ----- | 1-4,6, 8-13 | |
| A | XIA GAOQIANG ET AL: "Highly uniform platinum nanoparticles supported on graphite nanoplatelets as a catalyst for proton exchange membrane fuel cells", INTERNATIONAL JOURNAL OF HYDROGEN ENERGY, vol. 38, no. 31, 5 September 2013 (2013-09-05), pages 13754-13761, XP028730747, ISSN: 0360-3199, DOI: 10.1016/J.IJHYDENE.2013.08.033 * the whole document * ----- | 1-13 | |
| | | | TECHNICAL FIELDS SEARCHED (IPC) |
| | | | H01M B01J |

The present search report has been drawn up for all claims

3

| Place of search | Date of completion of the search | Examiner |
|---|---|---|
| The Hague | 4 June 2015 | Crottaz, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 19 7142

This annex lists the patent family members relating to the patent documents cited in the above-mentioned European search report. The members are as contained in the European Patent Office EDP file on
The European Patent Office is in no way liable for these particulars which are merely given for the purpose of information.

04-06-2015

| Patent document cited in search report | Publication date | Patent family member(s) | Publication date |
|---|---|---|---|
| CN 103041857 A | 17-04-2013 | NONE | |
| CN 102120186 A | 13-07-2011 | NONE | |
| US 2011129762 A1 | 02-06-2011 | KR 20110060591 A<br>US 2011129762 A1 | 08-06-2011<br>02-06-2011 |

EPO FORM P0459

For more details about this annex : see Official Journal of the European Patent Office, No. 12/82